# EUROPEAN PATENT APPLICATION

(11) **EP 1 120 182 A2**
(43) Date of publication of application: **01.08.2001**
(21) Application number: 01100164.1
(22) Date of filing: 16.01.2001
(51) Int. Cl.: B23D 57/00, B28D 5/04

(54) **The drive pulley and the wire saw equipment using it and the cutting method**

(30) Priority: 27.01.2000 JP 2000019177; 05.12.2000 JP 2000370193
(71) Applicant: Mitsubishi Materials Corporation, Chiyoda-ku, Tokyo (JP); Nippon Diamond Corporation, Yokohama-shi, Kanagawa-ken (JP)
(72) Inventor: Mazaki, Shigeru, Mitsubishi Materials Corp., Chiyoda-ku, Tokyo (JP); Kawahara, Tsuyoshi, Nippon Diamon Corp., Yokohama-shi, Kanagawa-ken (JP)
(74) Representative: HOFFMANN - EITLE

(57) **Abstract**

The drive equipment which becomes from the drive pulley is attached to the prop supported by the base stand. The drive pulley consists of a stator which is a fixed axis and annular rotor prepared in the perimeter of stator and a pulley part of ring state prepared in the perimeter of rotor. The wire saw which has a ring part sintered diamond abrasive particle in the wire rod such as wire etc. is arranged and winded in a groove portion formed in the perimeter of pulley part. The wire saw winded to the pulley part is made to run by carrying out the rotating drive of rotor by turning on electricity to drive pulley and contact the wire saw and cut the cut material which made to winded.

## Description

The drive pulley and the wire saw equipment using it and the cutting method.

### Field of the Invention

This invention relates to the drive pulley and the wire saw equipment using it and the cutting method which make it run wire saw used in case that the concrete structures such as a building and a bridge are cut.

The disclosure of Japanese Application No.2000-019177 and No.2000-370193 is hereby incorporated by reference into the present application.

### Description of the Background

Conventionally, in case concrete structures such as a building and a bridge, are cut and removed for the reinforcement or withdrawal, the wire saw equipment using wire saw which has the ring part which sintered abrasive particles openly interval in the wire rod of long pictures, such as a wire gave resin coating or rubber covering. This wire saw equipment rotate the pulley by which wire saw was winded by the electric gear motor, engine, or the oil pressure motor, and cuts a cut materials by this wire saw.

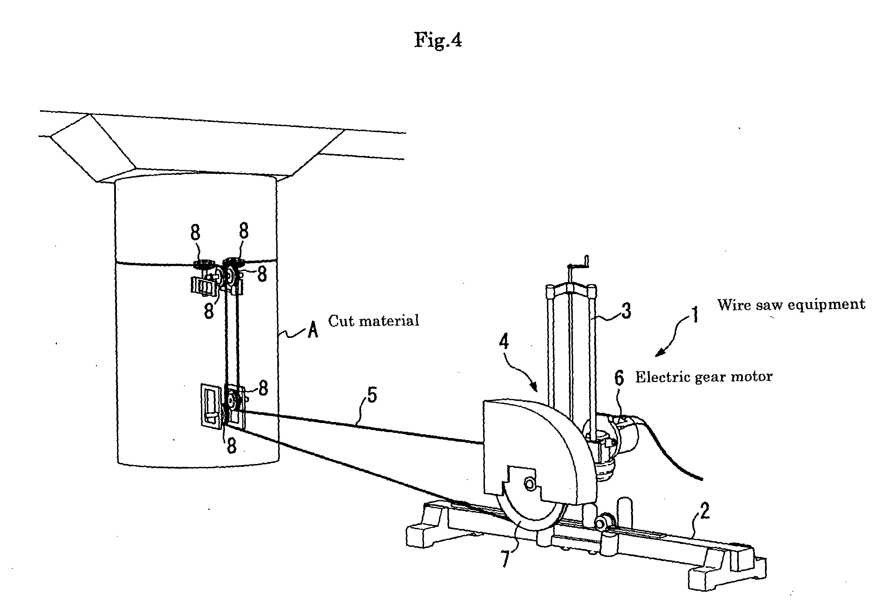

Here, this kind of wire saw equipment shown in Fig.4 is explained for an example.

In a figure, a mark 1 is a wire saw equipment. This wire saw equipment 1 has base stand 2 installed in floor face, the support 3 set up possible to move in the direction of long length on this base stand 2, the drive equipment 4 supported possible to rise and fall to this support 3, and wire saw 5 it runs with this drive equipment 4. The drive equipment 4 has the electric gear motor 6 and the pulley 7 connected to this electric gear motor 6, and wire saw 5 is winded to this pulley 7. The wire saw 5 is guided and winded by two or more guide pulleys 8 in the cut part of cut material A such as a bridge pier.

And in order to cut the cut material A by this wire saw equipment 1, the pulley 7 is rotated by making the electric gear motor 6 drive, and it is made to run wire saw 5 in the condition that the predetermined tension is always given to wire saw 5. If it does in this way, the cut material A will be cut by the ring part of wire saw 5 by running, while wire saw 5 contacts the cut material A.

### Object of This Invention

By the way, although it is necessary to make it run wire saw 5 at high speed in this kind of wire saw equipment 1, since the electric gear motor 6 , engine or oil pressure motor used as a source of a drive, have a comparatively low number of rotations, it is necessary to make a diameter of a pulley 7 largely, moreover, there are also many parts number, for this reason, the tendency of a large size and large weight did not be escaped. Therefore, there was a problem that handling was bad. Moreover, in case that the electric motor with a comparatively small noise comparison to engine or oil pressure motor was used, there was also a problem which a loud noise occurs in a gear portion.

This invention was made in view of the above mentioned situation, it aims to offer a drive pulley which is a compact and is possible to rotate in high speed, and to offer a wire saw equipment with a compact, light-weight, high performance, and low noise using this drive pulley, and also to offer the cutting method.

### Summary of the Invention

In order to attain the above mentioned purpose, the drive pulley of claim 1 has a stator which is a fixed axis and an annular rotor prepared in the perimeter of this stator, and a pulley part established in the perimeter of this rotor in which a wire rod is winded in the direction of perimeter. It is characterized to make the wire rod winded in a pulley part through above mentioned rotor rotate to above mentioned stator by turning on electricity.

Thus, since it was made as to run the wire rod which was winded to the perimeter by rotating directly annular rotor established in the perimeter of stator which is a fixed axis, in case that it is used as an equipment which makes it run a wire rod, the miniaturization and light-weighting of the equipment can be attained, and a handling nature can be raised sharply.

Moreover, since high speed rotation is possible as compared with engine, oil pressure motor, or electric gear motor, it is possible to improve in the speed of line speed of wire saw not using large diameter of pulley, and also possible to be reduced noise sharply.

The drive pulley of claim 2 is characterized that the attachment and detachment to above mentioned rotor are possible for the above mentioned pulley part in the drive pulley of claim 1.

That is, since attachment and detachment of the pulley part by which a wire rod is winded are enabled, the pulley part from which an outer diameter is different according to the conditioned demanded such as line speed, can be changed, and the flexibility can be raised.

The wire saw equipment of claim 3 is the wire saw equipment which cuts the above mentioned work material by making it run, contacting wire saw which consists of a wire rod with which abrasive particles are prepared. The drive equipment which makes it run the above mentioned wire saw consists of a drive pulley of claim 1 or claim 2, it is characterized by making the above mentioned wire saw run by rotating above mentioned rotor through the winding the above mentioned wire saw by the pulley part of this drive pulley.

That is, as a drive equipment which makes it run a wire rod, since it is used the drive pulley which make it run the wire rod which is winded in the perimeter, by rotating directly annular rotor which is established in a perimeter of stator which is a fixed axis, miniaturization and light-weighting of the equipment is possible, and handling nature can be raised sharply.

Moreover, since high speed rotation is possible as compared with the case where engine, oil pressure motor or electric gear motor is used, the improvement of a speed of a wire saw can be easily attained without using the pulley of the diameter of a large pulley, noise can also be reduced sharply.

In a wire saw equipment in the claim 4, it is characterized that two or more drive pulley mentioned above are prepared, and above mentioned wire saw is winded in these plural drive pulley and is arranged in a predetermined position.

Thus, since wire saw is winded and arranged in two or more drive pulleys, it is possible to make the wire saw run in a condition of good stability and powerfully without it makes wire saw slip by these drive pulleys, and it becomes further high speedy and also miniaturization of the whole equipment is attained.

The wire saw equipment of claim 5 is characterized that above mentioned wire saw in a wire saw equipment of claim 3 or claim 4 is prepared opening an interval the ring portion which is sintered diamond abrasive particles as a abrasive particles to the above mentioned wire rod.

Thus, since wire saw which runs by a drive pulley ring parts which diamond abrasive particles as an abrasive particles is sintered to the wire rod, the cut materials is cut very easily and good state by ring part of wire saw which runs in a high speed by a drive pulley. The cutting method of claim 6 is characterized that above mentioned cut material is cut by making above mentioned wire saw run through the rotation of above mentioned rotor of above mentioned drive pulley, straining by the wind a part of above mentioned wire saw which is winded to above mentioned drive pulley which consists of wire saw equipment of claim 3~5 to above mentioned cut material.

Thus, since drive pulley which makes it run wire saw which is winded in a perimeter of stator, rotating directly annular rotor which is arranged in a perimeter of stator which is a fixed axis is used, in comparison with engine, oil pressure motor or electric gear motor, line speed of wire saw can be easily made high speed without using the pulley of the diameter of a large, and the cut material can be easily cut in low noise, and miniaturization can be also attained.

### Brief Description of the Drawings

Figure 1 is the perspective diagram of the wire saw equipment in the middle of the cutting work explaining composition and structure of the wire saw equipment using the drive pulley of the enforcement form of this invention and it.

Figure 2 is the perspective diagram of a drive pulley explaining the composition and structure of a drive pulley of this invention.

Figure 3 is the sectional view of a drive pulley explaining the composition and structure of a drive pulley of this invention.

Figure 4 is the perspective diagram of wire saw equipment explaining the composition and structure of wire saw equipment.

### Brief Description of the Preferred Embodiments

Hereafter, the example of an enforcement form of the wire saw equipment using the drive pulley of this invention and it and the cutting method is explained with reference to a drawing. In addition, the same mark is given to the same structure portion as the conventional technology, and the explanation is omitted into it.

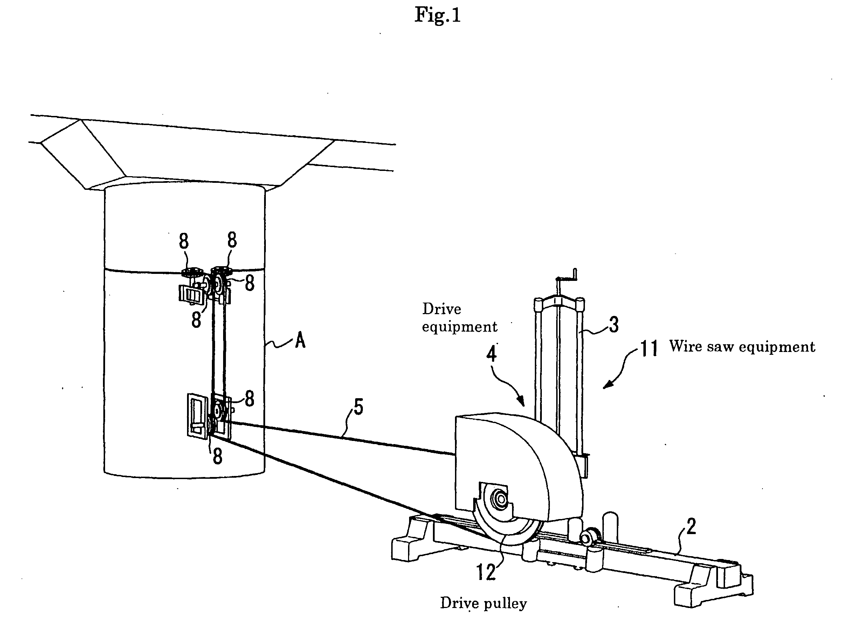

In Figure 1, a mark 11 is the wire saw equipment of this enforcement form. The drive pulley 12 is supported by the support 3 and the drive equipment 4 is constituted by this drive pulley 12 in this wire saw equipment 11.

Next, the structure of the drive pulley is explained.

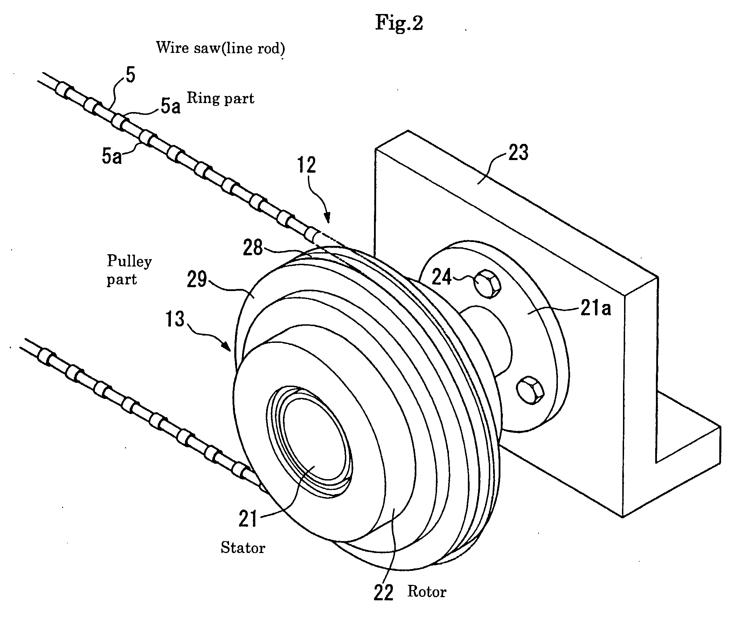

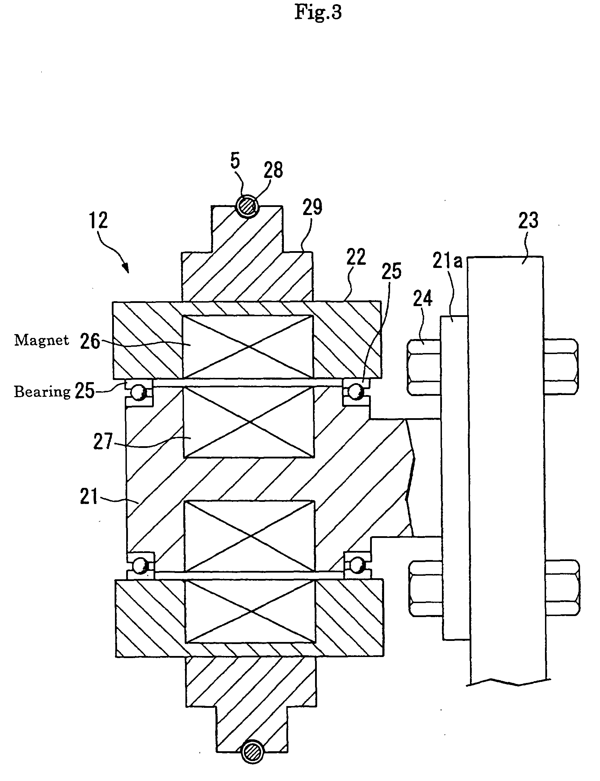

As shown in Figure 2 and Figure 3, the drive pulley 12 has a stator 21 and the rotor 22 established in the perimeter side of this stator 21, and the flange 21a established prepared in the end portion of stator 21 is fixed jointly by bolt to the bracket 23 fixed to the support 3. The bearing 25 is prepared between stator 21 and rotor 22, and the rotor 22 is supported possible to rotate by these bearing 25, and the power of the direction of thrust and the power of the radial direction acting on rotor 22 are received.

A magnet 26 is prepared in the inner side of rotor22, and the coil 27 is prepared in perimeter side of stator 21. And rotor 22 which has a magnet 26 becomes to be rotated by supplying the current to a coil 27. That is, this drive pulley has the composition so that the rotor 22 which is a ling-like rotator becomes to be rotated in perimeter side of stator 21 used as fixed axis. In addition, the magnet of neodium-iron-boron system and or the magnet of samarium-cobalt system which occur strongly magnetic force as a magnet 26 are used.

The pulley part 29 in which the groove portion 28 is formed in the direction of a circumference covering the perimeter side is attached possible to attach or detach in perimeter side of rotor 22, and the wire saw 5 is arranged and winded in a groove portion 28 of this pulley part 29.

In order to cut the cut material A by the wire saw equipment 11 equipped with the drive pulley 12 of the above mentioned structure, a part of wire saw 5 of this wire saw equipment 11 is first strained by predetermined tension in the state where it was made to wind to the cut material A. In this state, the drive current is supplied to stator 21 of the drive pulley 12 and rotor 22 is rotated. By doing this, wire saw 5 will run at high speed by the drive pulley 12, and the cut material A will be cut by this wire saw 5.

That is, according to the wire saw equipment 11 using the drive pulley 12 which is constituted as mentioned above and it, if the drive current is supplied to stator 21 of the drive pulley 12, the rotor 22 will rotate at high speed. By this, the wire saw 5 arranged at the groove portion 28 of the pulley part 29 which is prepared in perimeter side of this rotor 22 runs at high speed, and by this, the cut material A which this wire saw 5 is winded by predetermined tension is cut in ring part 5a which is the sintering part of diamond abrasive particle of wire saw 5 and the cut material is cut down.

Thus, according to the above mentioned drive pulley 12 and the wire saw equipment 11 using it, since it is made to run wire saw 5 which is winded in perimeter of the rotor, by rotating directly circular rotor 22 which is prepared in perimeter of stator 21 which is a fixed axis, by using drive equipment 4 which is made to run wire saw 5, it can be attained miniaturization and light weighing of whole equipment and handling nature can be raised sharply.

Moreover, since high speed rotation is possible as compared with engine, oil pressure motor, or electric gear motor, the improvement in the speed of line speed of wire saw 5 can be easily attained without using the pulley of the large diameter, and the noise can also be reduced sharply. And since the attaching and detaching of the pulley part 29 by which wire saw 5 is winded are enabled, the pulley part 29 from which an outer diameter is different according to the conditions such as line speed etc. which is demanded can be changed, and the flexibility can be raised.

Furthermore, since wire saw 5 it runs by the drive pulley 12 has ring part 5a which sintered diamond abrasive particle as abrasive particle to the wire rod, ring part 5a of wire saw 5 in which a high speed run is carried out by the drive pulley 12 can cut the cut material A very easily and in good state.

Moreover, according to the cutting method by the wire saw equipment 11 of the above-mentioned structure, since annular rotor 22 established in the perimeter of stator 21 which is a fixed axis is rotated directly and the drive pulley 12 which makes it run wire saw 5 winded in the perimeter is used, line speed of wire saw 5 can be easily made high speed without using the pulley of the large diameter as comparison with the case where engine , an oil pressure motor, or an electric gear motor, and the cut material A can be easily cut in low noise, and miniaturization can be attained.

In addition, although the magnet 26 is prepared in rotor 22 in the above-mentioned example, it is good also as the structure which could prepare the coil in the rotor 22 side and the magnet could be prepared in the stator 21 side , or prepared the coil in both stator 21 and rotor 22. Moreover, which form of a brush or brush-less is sufficient as the drive pulley 12 which has these stator 21 and rotor 22.

In addition, in the above-mentioned example, although it was made to run wire saw 5 as a wire rod it is made to run by the drive pulley 12, a belt or chains such as a common belt and V belt, etc. are sufficient, and the pulley part 29 is exchanged by the thing of various form ( in the case of a chain, it is a sprocket ) in these cases according to the wire rod it is made to run, for example.

Moreover, although the drive pulley 12 was formed in the drive equipment 4 and it was made to run wire saw 5 by this drive pulley 12 in above mentioned wire saw equipment 11, this wire saw is winded and arranged to two or more drive pulley 12 and it may be made to make it run wire saw 5 by the drive pulley 12 of these plurality. That is, in the above-mentioned wire saw equipment 11, you may be made to use the drive pulley 12 as a guide pulley 8 which guides the wire saw 5 to the cut part of the cut material A.

And , it can be possible to make to run the wire saw 5 by these drive pulley strongly and in a good state of stability without slipping and the further high speed run can be also possible by considering as the composition which makes it run wire saw 5 by two or more drive pulleys 12 in this way, moreover, miniaturization of the whole equipment can be attained further.

## Claims

1. The drive pulley comprised of stator which is a fixed axis, annular rotor prepared in the perimeter of this stator and the pulley part prepared in this rotor, in which a wire rod is winded to the perimeter, and characterized by making it run the wire rod winded to the pulley part by rotating the rotor to the stator by turning on electricity.

2. the drive pulley of claim 1 characterized that the above-mentioned pulley part is enabled the attaching and detaching to the above-mentioned rotor.

3. The wire saw equipment which cuts the cut material by making it run contacting wire saw consisting of the line rod prepared abrasive particle to the cut material, and the wire saw equipment characterized that the drive equipment running the above-mentioned wire saw consists of the drive pulley of claim 1 and claim 2, the above-mentioned wire saw is winded to the pulley part of this drive pulley, and it make it run the wire saw by making the rotor rotating.

4. The wire saw equipment of claim 3 characterized that above-mentioned drive pulley is prepared two or more, and above-mentioned wire saw is winded to the drive pulley of these plurality and arranged in the predetermined position.

5. The wire saw equipment of claim 3 or claim 4 characterized that the above-mentioned wire saw has the ring parts sintered diamond abrasive particle as abrasive particle preparing opening an interval in the above-mentioned wire rod.

6. The cutting method characterized that a part of wire saw winded drive pulley which constitute wire saw equipment described in any one claim of claim 3 to 5 is winded to the cut material and make it straining and running the wire saw by rotating the rotor of drive pulley and cut the cut material.
